# EUROPEAN PATENT APPLICATION

(11) **EP 2 757 478 A1**
(43) Date of publication of application: **23.07.2014**
(21) Application number: 14151341.6
(22) Date of filing: 15.01.2014
(51) Int. Cl.: G06F 11/20, H04L 12/931, G06F 9/455, H04L 12/46, H04L 29/06

(54) **Node device, communication system, and method for switching virtual switch**

(30) Priority: 18.01.2013 JP 2013007799
(71) Applicant: Hitachi, Ltd., Tokyo 100-8280 (JP)
(72) Inventor: Mizuno, Kazuhiko, Chiyoda-ku, Tokyo 100-8280 (JP); Tsushima, Yuji, Chiyoda-ku, Tokyo 100-8280 (JP); Okuno, Michitaka, Chiyoda-ku, Tokyo 100-8280 (JP)
(74) Representative: Moore, Graeme Patrick

(57) **Abstract**

When a failure occurs in a virtual machine (hereinafter called "VM"), degenerate operation not routed through the VM which is a failure target, and corresponding to a communication service on the VM is conducted to shorten a communication interrupt time. A communication path of a virtual switch in a multitenant environment where a virtual machine that operates a plurality of software provides a communication service for cloud computing such as a WAN high-speed technology is controlled. The control method, for example, comprises the steps of monitoring an operating status of the communication service of the virtual machine, and conducting a communication control by changing the communication path and a communication method of the virtual machine according to an application of the communication service if a failure occurs in the application of the communication service of the virtual machine.

## Description

### CLAIM OF PRIORITY

The present application claims priority from Japanese patent application JP 2013-007799 filed on January 18, 2013, the content of which is hereby incorporated by reference into this application.

### BACKGROUND OF THE INVENTION

### 1. Field of the Invention

The present invention relates to a node device, a communication system, and a method for switching a virtual switch, and more particularly to a node device, a communication system, and a method for switching a virtual switch, which controls a path route of the virtual switch to continue a communication when a failure occurs in a communication service on a virtual server.

### 2. Description of the Background Art

With the spread of cloud computing, data centers provided by data center providers or communication carriers are increasingly used. In general, the data centers are frequently installed at remote locations, and accessed via a local area network (LAN) or a wide area network (WAN) in use.

In the network using the WAN, a communication speed becomes low because a bandwidth is narrow, a line delay is large, and a line quality is low as compared with the network using the LAN. Under the circumstances, in recent years, the development of a WAN high-speed technology has been promoted, and a WAN high-speed device is provided in each vendor. In general, the WAN high-speed device is installed as a relay device that connects the LAN and the WAN on a client side, and the LAN and the WAN on a data center side. The WAN high-speed device controls data communicated between the client and the data center to improve the communication speed of the WAN.

Also, in the data center, with the spread of a virtualization technology, a virtual environment within the same system is configured, and a virtual multitenant environment that aggregates communication services such as a WAN high-speed technology provided by each vendor is being used. In the virtual multitenant environment, a high availability is provided by using a management mechanism provided by the loaded virtualization technology or a management mechanism provided by the communication service.

As a background art of the technical field providing the high availability of the virtual multitenant environment, there are provided a technique for automatically restarting a virtual machine (VM) which is a failure target if a failure occurs in the VM, and a technique in which when one physical server causes a failure, the physical server fails over to another physical sever to continue the communication service (refer to, for example, "VMware High Availability, the provision of High Availability to All Virtual Machines", Data Sheet, 2009, and JP-A-2007-088949).

Also, there is provided a technique in which communication node devices that relay the LAN and the WAN are connected to an in-path configuration to conduct redundancy, and if a failure occurs in one of the communication node devices, another communication node device takes over the communication service to continue the communication service (refer to, for example, "Cisco Wide Area Application Service (WAAS) Solution Guide", Catalog Guidebook, pp. 34 to 37, "Cisco WAAS Configuration Guideline", 2011).

### SUMMARY OF THE INVENTION

In the technique in which the VM restarts, or the VM fails over to the physical server, or technique in which the VM is switched to a standby communication node device as disclosed in "VMware High Availability, the provision of High Availability to All Virtual Machines", Data Sheet, 2009, or "Cisco Wide Area Application Service (WAAS) Solution Guide", Catalog Guidebook, pp. 34 to 37, "Cisco WAAS Configuration Guideline", 2011, when a failure occurs in the physical server or an operating system (OS) on the VM, the failure can be restored in a short communication interrupt time. However, this technique does not deal with the failure in an application on the VM. If the failure of the VM is caused by the application, the restart or the fail-over is executed without detection of a failure cause of the VM. However, the failure cannot be avoided in the restart or fail-over of the VM, and thereafter the failure cause may be removed by another technique. In this case, a time required for processing of the restart or fail-over is added to the communication interrupt time, resulting in a possibility that the communication interrupt time considerably affects a normal work.

As an example of the failure in the application, some trouble occurs due to update of the application or a configuration change. The failure in the application may occur due to another cause.

Also, in the above technique, the redundant configuration is provided as a countermeasure against the failure to conduct the fail-over or the system switching. However, when the failure is not normally restored as with the above-mentioned failure, there is a need to also maintain the standby communication node device as a failure recovery processing, and the time required for the failure recovery processing has a potential to be increased.

In the failure monitoring or the countermeasure against the failure, a management server is installed outside to make it possible to grasp the overall system, and the countermeasure against the failure such as the fail-over to an appropriate physical server can be provided. However, when the failure is thus monitored or dealt with by the external management server, there is a possibility that failure risks such as congestion of the communication line or the failure in the management server increase. In association with this, the failure recovery processing is delayed to have a potential to increase the communication interrupt time.

As described above, when the failure other than a failure treatment range occurs, there arises such a problem that the communication interrupt time is increased without conducting an appropriate failure treatment to hamper a convenience of the communication service.

From the above-mentioned viewpoint, the present invention aims at providing a node device, a communication system, and a method for switching a virtual switch, which continue a communication even when a failure occurs in the provided communication service.

The present invention includes a plurality of solutions to the problem, and as one example of the solutions, there is provided a method for controlling a communication path of a virtual switch in a multitenant environment providing a communication service intended for cloud computing such as a WAN high-speed technique in a virtual machine that runs a plurality of software, including the steps of monitoring a running state of the communication service of the virtual machine, and changing a communication path and a communication method of the virtual machine in conformity to the application of the communication service if a failure occurs in the application of the communication service of the virtual machine.

Specifically, in the virtual multitenant environment in which the communication service such as the WAN high-speed technology provided from each vendor is aggregated into one appliance device by the virtualization technology, the failure of the VM is monitored according to an operating status of the communication service that operates on each VM, or a utilization situation of a resource such as a CPU used by the VM.

Then, when the failure of the VM is detected, the communication path of the virtual switch is changed to conduct regenerate operation that continues a communication without being routed through the VM which is a failure target. As a result, an adverse effect such as a communication speed reduction occurs without getting a communication service on the VM. However, because the communication can be continued not depending on the type of adverse effect, an influence on the normal work can be mitigated.

In the regenerate operation, because usage application is different depending on the communication service that operates on the VM, a control is conducted according to the communication service. For example, in a service that speeds up the communication such as the WAN speed-up technique, the communication path is controlled to directly conduct a communication without being routed through the VM of the failure target. Also, the usage applications of a virtual NIC provided in the VM of the failure target is managed by using a table so that a direction of communication can be grasped, and a control including the direction of communication during a failure can be conducted.

In the above processing, the virtual switch is controlled to conduct the degenerate operation, but the same control can be conducted on a communication node device such as a physical switch.

According to the first solving means of the present invention, there is provided a node device, comprising:
a virtual machine that executes a given application to provide a communication service;
an interface unit that transmits and receives communication data;
a virtual switch unit that transfers the communication data between the virtual machine and the interface unit; and
a control unit that controls a communication path through the virtual switch unit between the interface unit and the virtual machine,
wherein the control unit monitors an operating state of the communication service of the virtual machine, and controls the virtual switch unit to change a communication path and/or a communication method of the communication data according to failure dealing information corresponding to the communication service when detecting a failure related to the provision of the communication service by the virtual machine.

According to the second solving means of the present invention, there is provided a communication system, comprising:
a first node device including
   a virtual machine that executes a given application to provide a communication service;
   an interface unit that transmits and receives communication data; and
   a control unit that controls a communication path to the virtual machine, and
a second node device that is located outside of the first node device and transfers the communication data to the first node device,
wherein
the control unit monitors an operating state of the communication service of the virtual machine, and transmits a control instruction to the second node device according to failure dealing information corresponding to the communication service when detecting a failure related to the provision of the communication service by the virtual machine, and
the second node device changes a communication path and/or a communication method of the communication data corresponding to failure dealing information.

According to the third solving means of the present invention, there is provided a method for switching virtual switch, comprising:
monitoring an operating state of a communication service of a virtual machine that executes a given application to provide the communication service, and
controlling a virtual switch to change a communication path and/or a communication method of a communication data from an interface unit to the virtual machine through the virtual switch according to failure dealing information corresponding to the communication service when detecting a failure related to the provision of the communication service by the virtual machine.

By the present invention, it is possible to provide a node device, a communication system, and a method for switching a virtual switch, which continue a communication even when a failure occurs in the provided communication service.

### BRIEF DESCRIPTION OF THE DRAWINGS

FIG. 1 is an exemplary configuration diagram of a virtual multitenant environment according to this embodiment;
FIG. 2 is an exemplary configuration diagram of an appliance device according to a first embodiment;
FIG. 3 is an exemplary stack diagram illustrating a relationship between the appliance device and software according to the first embodiment;
FIG. 4 is an example of a memory content according to the first embodiment;
FIG. 5 is an example of a configuration information table according to the first embodiment;
FIG. 6 is an example of an application table according to the first embodiment;
FIG. 7 is an example of an operating status monitoring table according to the first embodiment;
FIG. 8 is a flowchart illustrating overall processing on a data center side according to the first embodiment;
FIG. 9 is an example of effects of the degenerate operation;
FIG. 10 is a flowchart illustrating failure processing of a virtual server according to the first embodiment;
FIG. 11 is an example of failure monitoring items according to the first embodiment;
FIG. 12 is a flowchart illustrating failure monitoring processing according to the first embodiment; and
FIG. 13 is a flowchart illustrating regenerate operation processing according to the first embodiment.

### DETAILED DESCRIPTION OF THE INVENTION

Hereinafter, an embodiment will be described with reference to the drawings.

### First Embodiment

In this embodiment, an appliance device conducts degenerate operation when a failure occurs in a virtual server.

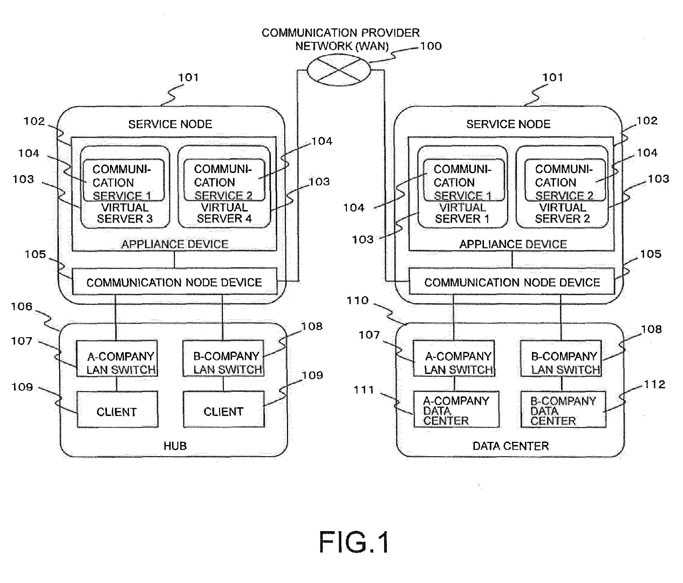

FIG. 1 is an exemplary configuration diagram of a virtual multitenant environment according to this embodiment. FIG. 1 illustrates an example in which clients (client devices) 109 in a hub 106 use a data center 110 via a WAN 100 with the use of communication services 104 provided by separate vendors (A company, B company). In the hub 106, the respective clients 109 are connected to an A-company LAN switch 107 or a B-company LAN switch 108 to conduct a communication.

Each of service nodes (node devices) 101 includes a communication node device 105 and an appliance device 102, and executes communication service processing (processing for providing a communication service, hereinafter called merely "communication services") 104 to control communication data when the respective clients 109 and the data center 110 communicate with each other. For example, when the communication service 104 which is an A-company service provides a WAN high-speed technology, the service nodes 101 can improve communication speeds of the WAN 100. Also, the communication services 104 each apply the virtualization technology to the appliance device 102, and operate on a corresponding virtual server (virtual machine) 103. In this embodiment, each of the service nodes 101 includes the communication node device 105. Alternatively, the communication node device 105 may be installed in a place such as the hub 106 or the data center 110, except for the service nodes 101.

In this embodiment, the service nodes 101 are installed between the hub 106 and the WAN 100, and between the data center 110 and the WAN 100. Alternatively, the service nodes 101 may be installed on only one side according to the communication services 104 provided by the service nodes 101.

The data center 110 includes, for example, an A-company data center 111 and a B-company data center 112, and is connected to the A-company LAN switch 107 or the B-company LAN switch 108 to conduct a communication, as in the hub 106.

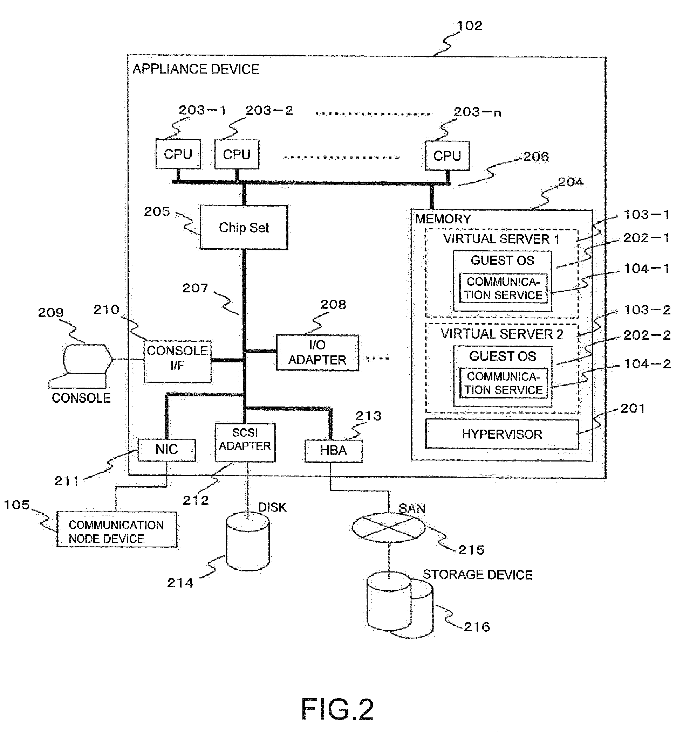

FIG. 2 is an exemplary configuration diagram of the appliance device 102 within each of the service nodes 101. For simplifying description, it is assumed that the two virtual servers 103 operate in this example. Alternatively, three or more virtual servers 103 may operate.

The appliance device 102 includes one or more CPUs 203. The CPUs 203 are connected to a chip set 205 through an interconnect 206 such as a quick path interconnect (QPI) or a scalable memory interconnect (SMI).

The chip set 205 is connected, through a bus 207 such as a PCI express, an I/O adapter 208, a network interface card (NIC) 211 connected to the communication node device 105, a small computer system interface (SCSI) adapter 212 connected to a disk device 214, a host bus adapter (HBA) 213 connected to a storage area network (SAN) 215 having a storage device 216, and a console interface (console I/F) 210 connected to a console 209.

The CPUs 203 access to a memory 204 through the interconnect 206, and access to the NIC 211 or the like from the chip set 205 to conduct given processing. A hypervisor 201 is loaded in a memory (storage unit) 204, and a guest OS 202 operates by a virtual server 103 controlled by the hypervisor 201.

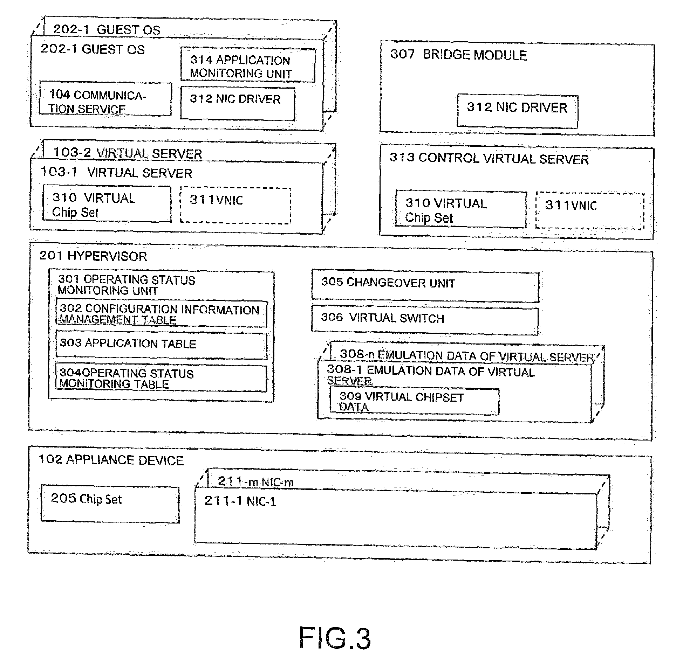

FIG. 3 is an exemplary stack diagram illustrating a relationship between the appliance device 102 and software according to this embodiment.

Subsequently, a main portion of a software configuration that realizes the virtual servers 103 on the appliance device 102, and a hardware element to be controlled will be described with reference to FIG. 3. On the appliance device 102, the hypervisor 201 that controls one or more virtual servers 103 operates.

The hypervisor 201 generates the virtual servers 103, and covalently or exclusively allocates an arbitrary virtual interface unit (VNIC, virtual NIC) 311 to the virtual servers 103. When the hypervisor 201 covalently allocates the arbitrary virtual NIC 311 to the virtual servers 103, the hypervisor 201 selects the virtual servers 103 of a communication destination by a bridge module 307, and the virtual servers 103 and the interface unit (NIC) 211 conduct a communication with each other through a virtual switch 306. When the hypervisor 201 exclusively allocates the arbitrary virtual NIC 311 to the virtual servers 103, the virtual servers 103 communicate directly with the NIC 211.

The hypervisor 201 includes emulation data 308 of the virtual servers 103 that holds a state of the virtual servers 103, an operating status monitoring unit 301 that monitors an operating status of the guest OS 202 and the virtual servers 103, a changeover unit 305 that controls a communication path of the virtual servers 103, and the virtual switch 306 which is a communication path between the virtual servers 103 and the bridge module 307. Also, the operating status monitoring unit 301 of the hypervisor 201 includes a configuration information management table (configuration information storage area) 302 managing configuration information of the communication service 104 that operates in the virtual server 103 or the guest OS 202, an application table (application information storage area) 303 managing application information of the communication service 104 that operates in the guest OS 202, and an operating status monitoring table (operating status storage area) 304 managing operating information of the communication service 104 that operates in the guest OS 202. Also, those respective tables are located on the memory 204. Those respective tables may be located outside of the operating status monitoring unit 301. The details of the configuration information management table 302, the application table 303, and the operating status monitoring table 304 will be described later.

The emulation data 308 of the virtual servers 103 includes virtual chip set data 309 which is provided to the virtual servers 103. The virtual chip set data 309 holds a state of a register and the like to be held by the virtual chip set data 309.

The operating status monitoring unit 301 detects a failure by analysis of the operation information registered in the operating status monitoring table 304, or a notification from an application monitoring unit 314 of the guest OS 202, and selects the communication path on the basis of operation information or application information registered in the configuration information management table 302 and the application table 303. Also, the operating status monitoring unit 301 conducts the degenerate operation for controlling the communication path with the use of the changeover unit 305.

The operating status monitoring unit 301, the changeover unit 305, and the application monitoring unit 314 configure a control unit that controls the communication path through the virtual switch unit between the NIC 211 and the virtual servers 103. Also, the virtual switch 306 and the bridge module 307 and the like configure the virtual switch unit that transfers communication data between the virtual servers 103 and the NIC 211.

A control virtual server 313 has the same configuration as that of, for example, the virtual servers 103, and controls a virtual environment of the virtual servers 103 and the hypervisor 201 and the like by the bridge module 307.

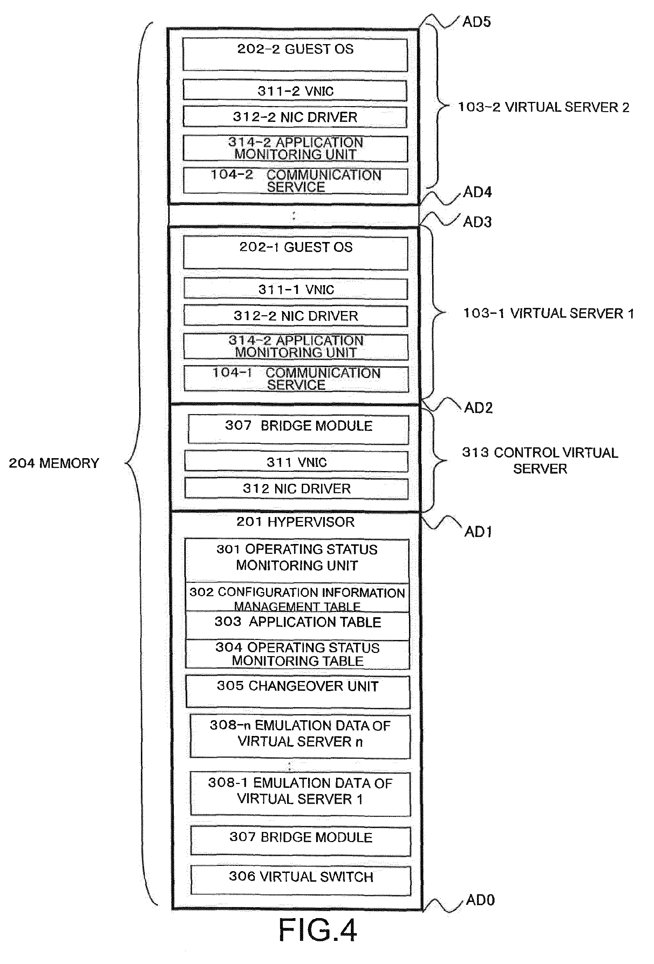

FIG. 4 illustrates an example of a configuration of the memory 204 managed by the hypervisor 201.

The hypervisor 201 allocates an area used by the hypervisor 201 per se, and an area used by the virtual servers 103 to the memory 204. For example, as illustrated in FIG. 4, the hypervisor 201 allocates addresses ADO to AD1 to an area of the hypervisor 201, and also allocates addresses AD1 to AD2 to the control virtual server 313, addresses AD2 to AD3 to a virtual server 103-1, and addresses AD4 to AD5 to a virtual server 103-2, respectively.

The guest OS 202, the arbitrary virtual NIC 311, an NIC driver 312, an application monitoring unit 314, and the communication service 104 are stored in the areas used by the respective virtual servers 103. For example, a program and data and the like for realizing the arbitrary virtual NIC 311, the application monitoring unit 314, and the communication services 104 are stored therein.

The emulation data 308 of the virtual servers 103, the operating status monitoring unit 301, the configuration information management table 302, the application table 303, the operating status monitoring table 304, the changeover unit 305, the bridge module 307, and the virtual switch 306 are stored in the area used by the hypervisor 201. For example, a program and data and the like for realizing the operating status monitoring unit 301, the changeover unit 305, the bridge module 307, and the virtual switch 306 are stored in those components.

The bridge module 307, the arbitrary virtual NIC 311, and the NIC driver 312 are stored in the area used by the control virtual server 313. For example, a program and data and the like for realizing the bridge module 307 and the VNIC 311 are stored in those components.

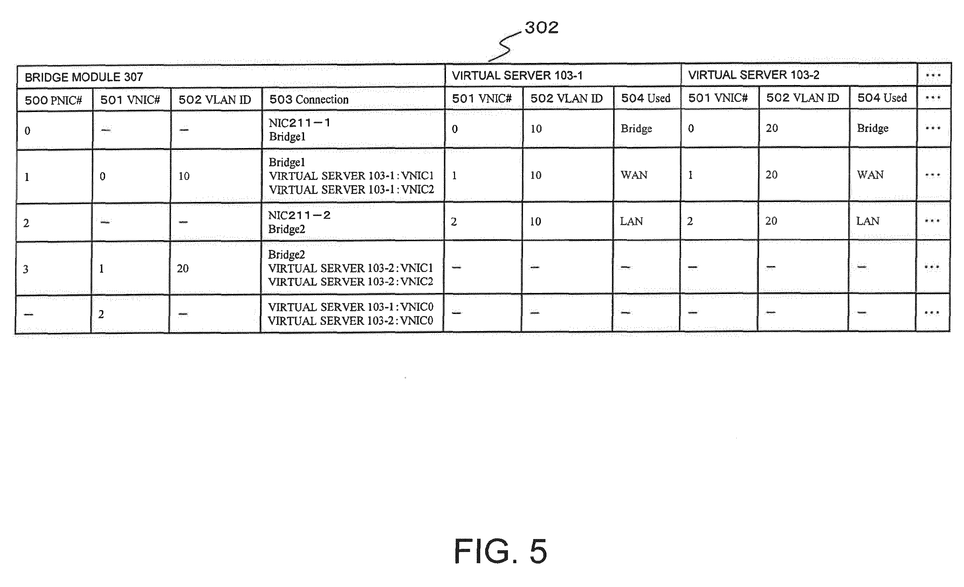

FIG. 5 illustrates a configuration example of the configuration information management table 302. The configuration information management table 302 is, for example, a table that holds a connection relationship of the virtual servers 103, the bridge module 307, and the NIC 211. Connection information between the bridge module 307 and the respective virtual servers 103 is stored in this table.

Identification information (for example, serial No., PNIC#) 500 of the I/O device, identification information (for example, serial No., VNIC#) 501 of the VNIC 311, and identification information (for example, serial No., and VLAN ID) 502 of the identification information (ID information) on a VLAN (virtual local area network) configuring the virtual network are stored from configuration information of the bridge module 307 in items of the bridge module 307 in this table. Connection information between the VNIC 311 and the NIC 211 allocated to the virtual servers 103 is stored in a connection 503.

A VNIC# 501 and a VLAN ID# 502 are registered from the configuration information of the virtual servers 103 in the items of the virtual servers 103, and usage applications of the VNIC# 501 are stored in a used 504. In this embodiment, as an example of the usage applications, when a communication using the WAN 100 is conducted, "WAN" is registered. When a communication using the LAN of the A-company LAN switch 107 or the B-company LAN switch 108 is conducted, "LAN" is registered. When a communication with the NIC 211 is conducted, "bridge" is registered.

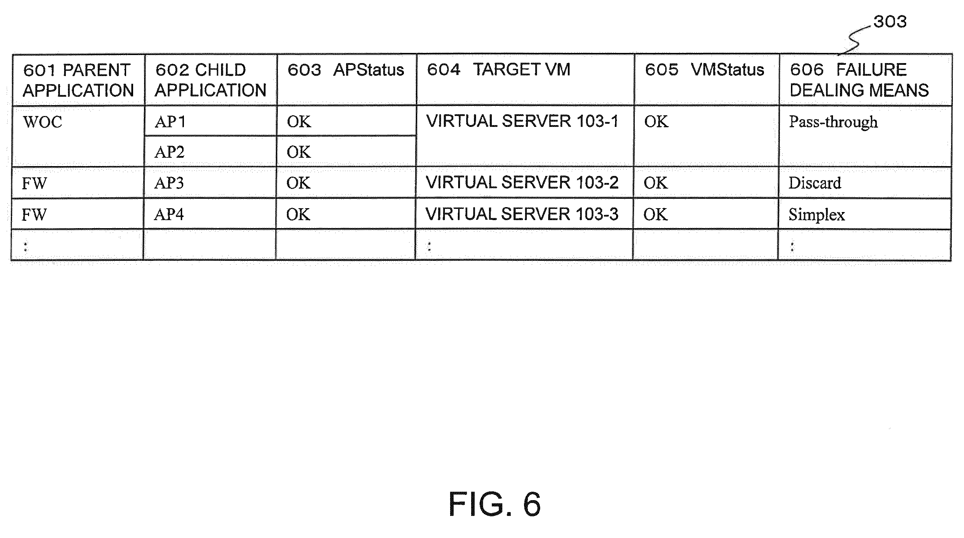

FIG. 6 illustrates a configuration example of the application table 303. The application table 303 is a table that holds the operating status of the application pertaining to the communication services 104 that operates on the respective virtual servers 103. In this table, the identification information on the application for executing the communication service 104 is registered from the application information of the communication services 104 which has been acquired at the time of configuring the environment or in advance in columns of a parent application 601. Applications pertaining to the parent application 601 are registered in columns of a child application 602. The operating statuses of the parent application 601 and the child application 602 are monitored by the application monitoring unit 314, and the operating statuses are notified the hypervisor 201 of from the virtual servers 103, and registered in columns of an application status (AP status) 603 of this table. For example, identification information of normal (OK) or failure (NG) is registered therein. Also, a name of the virtual server 103 on which a corresponding communication service 104 operates is registered in a target VM 604, and an operating status of the virtual servers 103 is registered in a virtual server status (VM status) 605. Identification information of normal (OK) or failure (NG) is registered in the VM status 605. Means for dealing with the failure occurring in the virtual servers 103 or the communication services 104 is registered in failure dealing means (failure dealing information) 606. For example, in the case of "path-through", path-through is set through no virtual servers 103. In the case of "discard", the communication data to be transmitted by the virtual servers 103 is discarded. In the case of "simplex", only one-side (one way) communication is conducted. In addition, predetermined appropriate dealing means when detecting a failure related to the provision of the communication services 104 such as a failure of the corresponding virtual servers 103 can be stored.

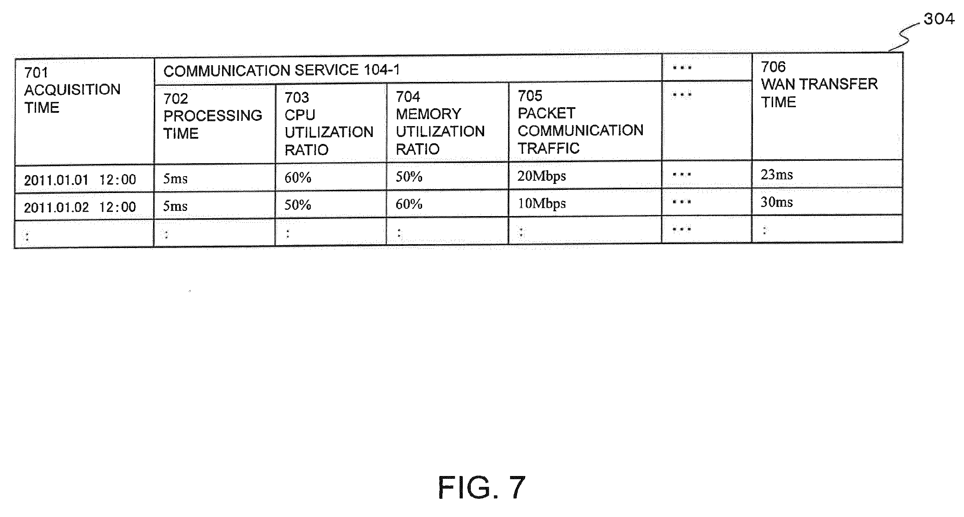

FIG. 7 illustrates a configuration example of the operating status monitoring table 304. The operating status monitoring table 304 is a table for holding the operating information related to the communication services 104. In this table, a time when the operation information is acquired is registered in an acquisition time 701, and a processing time of the communication services 104 is registered in a processing time 702. Also, a utilization ratio of the CPU 203 by the virtual server 103 on which the communication services 104 operate, and the usage of the memory 204 are registered in a CPU utilization ratio 703 and a memory utilization ratio 704, respectively. A packet communication traffic of the communication services 104 is registered in a packet communication traffic 705. A transfer time when conducting a communication through the WAN 100 is registered in a WAN transfer time 706. In this example, an example of the respective items is described, and another parameter such as an I/O utilization ratio may be newly added, or any described item may be omitted. The operating status monitoring table 304 is updated by, for example, the operating status monitoring unit 301. In an example of FIG. 7, a row corresponding to a new acquisition time is added.

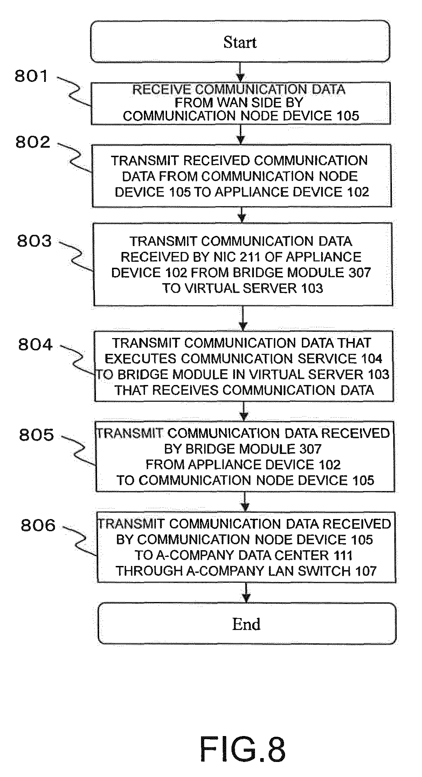

FIG. 8 is an exemplary flowchart illustrating overall processing on the data center side according to the first embodiment. An example of processing for communicating with the data center 110 through the WAN 100 will be described with reference to FIG. 8. FIG. 8 illustrates an example of the processing on the data center 110 side, but the same is applied to processing on the hub 106 side. In this example, processing in a normal state where no failure occurs will be first described.

First, the communication node device 105 of the service node 101 receives the communication data from the client 109 through the WAN 100 (Step 801). The received communication data is transmitted to the appliance device 102 (Step 802). A communication path between the communication node device 105 and the appliance device 102 can be controlled by setting, for example, the VLAN.

In the appliance device 102, the communication data received by the NIC 211 is transmitted to the bridge module 307, and transmitted to the virtual server 103 which is a communication destination through the virtual switch 306 (Step 803). In the bridge module 307, a communication control with the virtual servers 103 is conducted, and the received communication data is analyzed to specify the virtual server 103 which is the communication destination, and the communication data is transmitted from the bridge module 307 to the virtual server 103 through the virtual switch 306.

The virtual server 103 executes the communication services 104 to control the communication data, and transmits the communication data to the bridge module 307 (Step 804). In the processing of Step 804, a control method (processing) is different depending on the function provided by the communication services 104. For example, if the function is the WAN high-speed technology, a structure of the communication data is changed (first communication service). If the function is a security function, the communication data is filtered (second communication service). Also, a plurality of VNICs 311 are allocated to the virtual server 103, the communication destinations of the communication data routed through the WAN 100 and the communication data routed through the LAN are defined in the separate VNICs 311. As a result, the usage application and the communication directions and the like of the VNICs 311 can be grasped.

The virtual servers 103 transmit the communication data controlled by the communication service 104 to the bridge module 307, and the communication data is transmitted to the communication node device 105 through the NIC 211 (Step 805). The communication data is transmitted to the A-company data center 111 from the communication node device 105 through the A-company LAN switch 107 (Step 806).

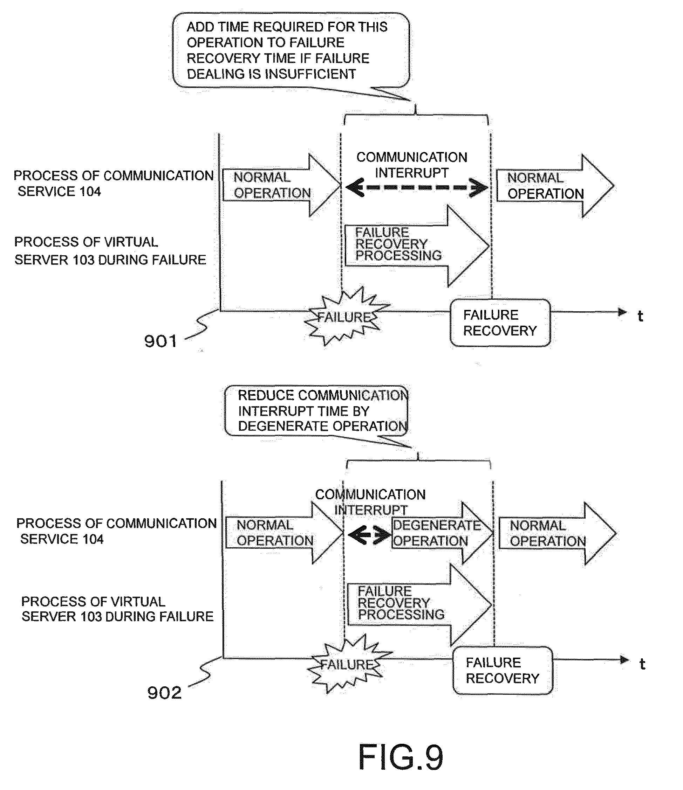

In the communication processing of FIG. 8, there is a possibility that the failure occurrence affects a communication interrupt time. FIG. 9 illustrates an outline of the processing during failure in the related art, and the processing during failure according to this embodiment. An upper drawing of FIG. 9 represents related-art failure processing 901, and a lower drawing represents failure processing 902 according to this embodiment.

In the related-art failure processing 901, if a failure occurs in the virtual servers 103 for some cause, the failure recovery processing is conducted by restart or fail-over of the virtual server 103, and normal operation is conducted after the failure recovery (upper drawing in FIG. 9). In this case, for example, if the application causes the failure in the virtual server 103, the failure is not recovered in the above-mentioned failure recovery processing. Therefore, a time required for this processing (restart, fail-over, etc.) is added to the communication interrupt time. Therefore, the restart of the normal operation is delayed to damage the convenience of the communication services 104.

On the other hand, in the failure processing 902 according to this embodiment, if a failure occurs in the virtual servers 103 for some cause, the failure recovery processing and the degenerate operation for continuing the communication are processed in parallel. As a result, the communication interrupt time can be shortened (lower drawing in FIG. 9). For example, even if the virtual server 103 fails due to the failure of the application, the communication can be continued by the degenerate operation.

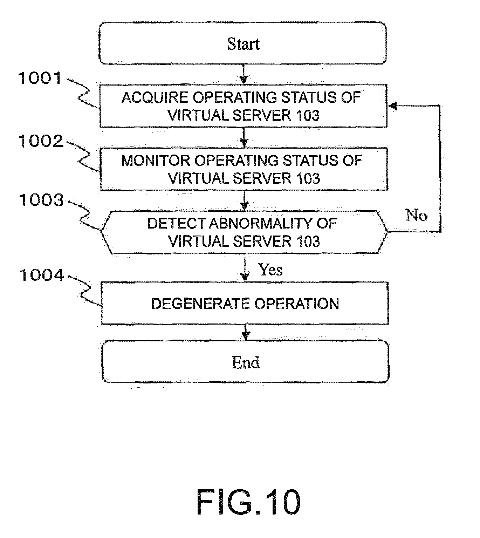

Hereinafter, an example of the failure processing 902 according to this embodiment will be described with reference to a flowchart of FIG. 10. FIG. 10 is an exemplary flowchart illustrating a general representation of the processing conducted by the failure processing 902 according to this embodiment.

The appliance device 102 (for example, the operating status monitoring unit 301 or the application monitoring unit 314) acquires the operating status of the communication service 104 provided by the virtual server 103, such as the operating status of the virtual server 103 within the appliance device 102 (Step 1001). The appliance device 102 analyzes the acquired operating information to monitor a provision state of the communication service 104 (Step 1002). If the appliance device 102 detects a failure related to the provision of the communication service 104 by the virtual server 103 (Step 1003), the appliance device 102 starts the degenerate operation (Step 1004).

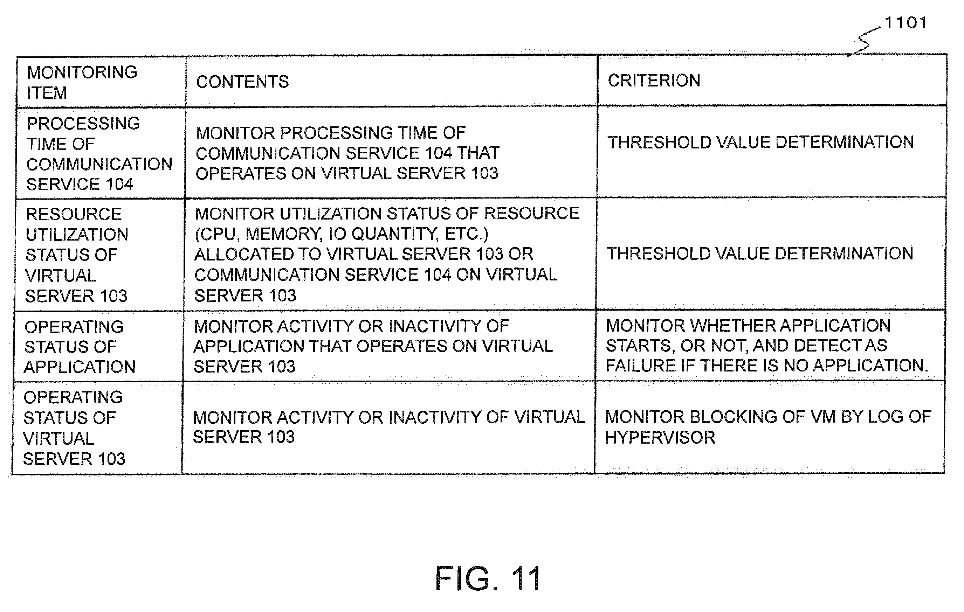

In this example, the failure related to the provision of the communication service 104 by the virtual server 103 includes, for example, the failure in the application for providing the communication service 104, the failure in the virtual server 103, or the failure in the processing of the communication service 104. The acquired information of the operating status of the communication service 104 by the virtual server 103, and the analysis method thereof will be described. FIG. 11 illustrates the example thereof. First, a processing time (702 in FIG. 7) of the communication service 104 is measured, and a case in which the processing time exceeds a predetermined first threshold value is detected as the failure. As this threshold value, for example, a WAN transfer time is used. In this situation, a case in which the processing time of the communication service 104 exceeds the WAN transfer time is determined as the failure because the communication service 104 may not normally function. Also, the utilization status (703 and 704 in FIG. 7) of the resource such as the CPU 203 or the memory 204 in the virtual server 103 is monitored, and a case in which a free resource is absent, or smaller than a predetermined threshold value (a case in which the resource utilization ratio exceeds a second threshold value) is determined as the failure because this may affect the communication service 104. Then, the operating status of the application (603 in FIG. 6) related to the communication service 104 is monitored, and a case in which this application stops is determined as the failure. Also, the operating status of the virtual server 103 is monitored by a log file output to the hypervisor 201 or the like, and a case in which the virtual server 103 is blocked (a case in which a fact that the virtual server is down can be confirmed by log) is determined as the failure. The conditions in this case are exemplary, and the addition of another condition, the omission of the condition may be arbitrarily conducted.

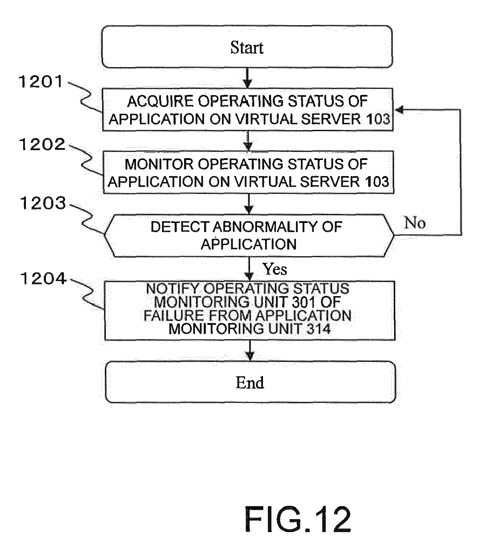

An example of the processing for monitoring the operating status of the application which is one of the above-mentioned failure monitoring will be described with reference to a flowchart of FIG. 12. FIG. 12 illustrates an example of the processing in the application monitoring unit 314.

First, the application monitoring unit 314 acquires the operating status of the application related to the communication service 104 that operates on the virtual server 103 (Step 1201). The application monitoring unit 314 analyzes the operating status of this application to monitor the application (Step 1202). In monitoring of the application, the application monitoring unit 314 uses the application table 303 within the hypervisor 201, and monitors the application registered in the application table 303.

If the application monitoring unit 314 detects the abnormality of the application due to the abnormal completion or the like of the application (Step 1203), the application monitoring unit 314 notifies the operating status monitoring unit 301 within the hypervisor 201 of the failure (Step 1204). In the abnormal detection of the application, the application used in the communication service 104 can be grasped by the application table 303, and the abnormality is detected if any of appropriate applications does not operate.

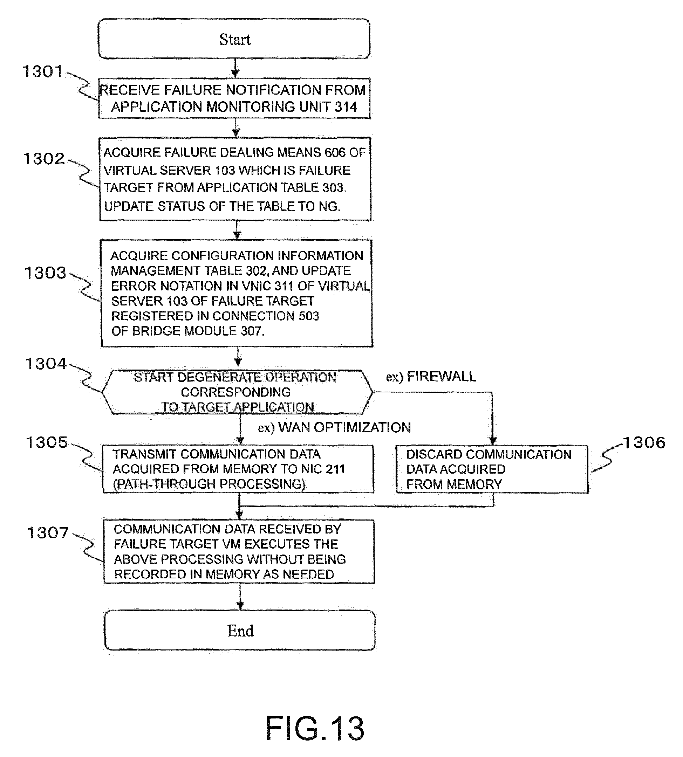

Hereinafter, an example of the degenerate operation conducted after the failure has been detected will be described with reference to a flowchart of FIG. 13.

FIG. 13 is an exemplary flowchart of the degenerate operation to be executed within the hypervisor 201. The operating status monitoring unit 301 within the hypervisor 201 receives a failure notification from the application monitoring unit 314 (Step 1301). The failure notification includes, for example, the identification information on the application whose failure is detected. The operating status monitoring unit 301 acquires the failure dealing means 606 of the virtual server 103, which is a failure target, registered in the application table 303 (Step 1302). For example, the operating status monitoring unit 301 acquires the failure dealing means 606 of the virtual server 103 corresponding to the identification information on the application included in the failure notification. In this situation, the operating status monitoring unit 301 registers "NG" in the AP status 603 of the application related to the communication service 104 that operates on the virtual server 103 of the failure target.

The same is applied to cases other than the failure of the application. For example, if the operating status monitoring unit 301 detects the failure of the virtual server 103 or the failure in the processing of the communication service 104, the operating status monitoring unit 301 acquires the failure dealing means 606 of the virtual server 103 which is the failure target registered in the application table 303 for the virtual server 103 whose failure has been detected, or the virtual server 103 that provides the communication service 104 whose failure has been detected.

Subsequently, the operating status monitoring unit 301 acquires (refers to) the configuration information management table 302, and updates an error notation in the VNIC 311 of the virtual server 103 which is the failure target registered in the connection 503 of the bridge module 307 (Step 1303). This makes it possible that the failure occurs in the communication service 104 on the virtual server 103 which is the failure target, and the communication data to the virtual server 103 that is the failure target is subsequently dealt with by the degenerate operation.

In the degenerate operation, the processing is conducted by the changeover unit 305 according to the failure dealing means 606 for each communication service 104 (Step 1304). Also, if the failure occurs, no short communication interrupt time occurs, and the communication data of the virtual server 103 of the failure target is ensured on the memory 204 during the communication interrupt time. For that reason, the communication data is acquired from the memory 204 at the time of starting the degenerate operation to conduct the processing.

As the degenerate operation matching the failure dealing means 606, for example, if the communication service 104 is the WAN high-speed technology, processing of returning the communication data acquired from the memory 204 to the NIC 211 without being transmitted to the virtual server 103 is conducted (Step 1305). As a result, the WAN high-speed processing is not conducted, but the communication path is controlled as a path-through, thereby making it possible to continue the communication per se. Also, if the communication service 104 is a firewall, because the communication data is not filtered, processing of discarding the communication data acquired from the memory 204 is conducted (Step 1306). Those processing contents are stored in the application table 303 as the failure dealing means 606. In the process of Step 1306, the usage application of the VNIC 311 in the virtual server 103 is registered in the configuration information management table 302. This makes it possible to determine whether the communication from the WAN to the LAN, or the communication from the LAN to the WAN is conducted. The communication in only one way of the communication direction can be allowed. For example, in the communication data to the virtual server 103 whose failure has been detected, the virtual switch 306 is controlled so that the communication data from the first network to the second network direction is returned to the NIC 211 that has received the communication data, and the communication data in the reverse direction is discarded, thereby continuing a one-way communication. Appropriated processing may be executed other than the path-through or the discard. In this situation, information for identifying that processing may be registered in the failure dealing means 606.

After the degenerate operation has started, the degenerate operation is executed without holding the communication data to the virtual server 103 which is the failure target in the memory 204 (Step 1307). For example, if the failure dealing means 606 is the path-through, the communication data that is received by the NIC 211, and normally transferred to the virtual server 103 via the virtual switch 306 and the control virtual server 313 is returned by the virtual switch 306 or the control virtual server 313. Also, if the failure dealing means 606 is the data discard, the communication data received by the NIC 211 is discarded by the virtual switch 306 or the control virtual server 313.

In the present specification, that the communication data is returned means that the received communication data may be transferred to a destination side, or the received communication data may be transferred to a source side.

With the above configuration and processing, if the failure occurs in the communication service 104 that operates in the virtual server 103, a communication to the communication service 104 which is the failure target stops, and the degenerate operation matching the communication service 104 is conducted, thereby making it possible to reduce the communication interrupt time. Also, the failure monitoring and the degenerate operation can be processed within the appliance device 102, and the external management server and the resource securement for redundant configuration can be eliminated.

In this embodiment, the degenerate operation is executed within the hypervisor 201 of the appliance device (first node device) 102. Alternatively, the degenerate operation can be executed in the communication node device (second node device) 105. This may be achieved by notifying the communication node device 105 of the failure dealing means 606 set in the communication service 104 at the time of generating the failure. For example, when the VLAN is configured in the communication node device 105, if the failure dealing means 606 is the "pass-through", the VLAN configuration that connects the communication node device 105 and the appliance device 102 may be changed. If the failure dealing means 606 is "discard", the VLAN configuration other than a port of the communication node device 105 connected to the WAN 100 may be canceled. Also, in this example, the degenerate operation assuming the VLAN has been described. Alternatively, a physical connection set in the communication node device 105 can be realized in the same procedure.

According to this embodiment, if the failure occurs in the VM, the degenerate operation that is not routed through the VM which is the failure target, and matches the communication service on the VM is conducted, thereby being capable of reducing the communication interrupt time. Also, according to this embodiment, the external management server for the failure monitoring and the resource securement for the redundant configuration can be reduced.

### (Configuration Example)

### (Configuration Example 1)

A method for controlling a communication path of a virtual switch in a multitenant environment where a virtual machine that operates a plurality of software provides a communication service for cloud computing such as a WAN high-speed technology, the method comprising the steps of:
monitoring an operating status of the communication service of the virtual machine; and
conducting a communication control by changing the communication path and a communication method of the virtual machine according to an application of the communication service if a failure occurs in the application of the communication service of the virtual machine.

### (Configuration Example 2)

The method for controlling the communication path of the virtual switch according to the configuration example 1, in which
if the communication service provides a function for changing the communication data in the virtual machine in which a failure is detected, the communication data is returned to a physical NIC of a physical machine that receives the communication data without transmitting the communication data to the virtual machine to continue the communication, and
if the communication service provides a function for filtering the communication from the external, the communication data is discarded without being transmitted to the virtual machine.

### (Configuration Example 3)

The method for controlling the communication path of the virtual switch according to the configuration example 1, in which
the communication data to the virtual machine in which the failure occurs is returned to the physical NIC in only one communication direction without being transmitted to the virtual machine according to a usage application of a virtual NIC of the virtual machine to continue the communication.

### (Configuration Example 4)

The method for controlling the communication path of the virtual switch according to the configuration example 1, in which
a case in which a processing time of the communication service exceeds a threshold value, a utilization ratio of a resource allocated to the virtual machine exceeds a threshold value, a stop of the communication service is detected, or a block of the virtual machine is detected, is determined as the failure.

### (Configuration Example 5)

The method for controlling the communication path of the virtual switch according to the configuration example 1, in which
if the failure occurs in the application of the communication service in the virtual machine, means for changing the communication path and the communication method of the virtual machine is notified a physical switch of to continue the communication processing.

### (Configuration Example 6)

The method for controlling the communication path of the virtual switch according to the configuration example 1, in which
the communication direction of the virtual machine and the utilization method for the communication service in the virtual machine can be specified by managing a communication intended purpose of the virtual NIC provided in the virtual machine in a table.

### (Configuration Example 7)

A virtual machine device that operates a plurality of system software on a physical machine having a CPU, a memory, and an NIC therein, in which
a hypervisor that generates one or more virtual machines, and operates an OS in each of the virtual machines is included in the memory,
the hypervisor includes:
an operating status monitoring unit that monitors an operating status of a communication service; and
a changeover unit that controls a communication path of the virtual switch,
the operating status monitoring unit includes: a configuration information management table that records connection information on the virtual machine, an application table that records information on the communication service that operates in the virtual machine, and an operating status monitoring table that records a utilization status of a resource allocated to the virtual machine,
the virtual machine includes an application monitoring unit that monitors the operating status of the communication service, and notifies the operating status monitoring unit of the failure if the application monitoring unit detects the failure of the communication service,
the operating status monitoring unit acquires failure dealing means of the virtual server that loads the communication service of a failure target registered in an application table, and
the changeover unit changes the communication path and the communication method of the virtual machine according to the failure dealing means, to thereby separate the virtual server of the failure target from a communication destination to continue communication processing.

### (Configuration Example 8)

The virtual machine device according to the configuration example 7, in which
as the failure dealing means of the virtual server,
if the communication service provides a function for changing communication data in the virtual machine in which the failure is detected, the communication data is returned to a physical NIC of a physical machine that receives the communication data without transmitting the communication data to the virtual machine to continue a communication, and
if the communication service provides a function of filtering the communication from an external, the communication data is discarded without being transmitted to the virtual machine.

### (Configuration Example 9)

The virtual machine device according to the configuration example 7, in which
as the failure dealing means of the virtual server,
a usage application of the virtual NIC of the virtual machine is acquired from the configuration information management table,
a communication direction is selected from the usage application of the virtual NIC of the virtual machine if a failure occurs in the virtual machine, and
the communication data is returned to the physical NIC in only one communication direction without being transmitted to the virtual machine to continue the communication.

### (Configuration Example 10)

The virtual machine device according to the configuration example 7, in which
a case in which a processing time of the communication service exceeds a threshold value, a utilization ratio of a resource allocated to the virtual machine exceeds a threshold value, a stop of the communication service is detected, or a block of the virtual machine is detected, is determined as the failure.

### (Configuration Example 11)

The virtual machine device according to the configuration example 7, in which
if the failure occurs in the application of the communication service in the virtual machine, means for changing the communication path and the communication method of the virtual machine is notified a physical switch of to continue the communication processing.

### (Configuration Example 12)

The virtual machine device according to the configuration example 7, in which
the communication direction of the virtual machine and the utilization method for the communication service in the virtual machine can be specified by managing a communication intended purpose of the virtual NIC provided in the virtual machine in the configuration information management table.

### (Configuration Example 13)

A node device, comprising:
a machine that executes a given application to provide a communication service;
an interface unit that transmits and receives communication data;
a switch unit that transfers the communication data between the machine and the interface unit; and
a control unit that controls a communication path through the switch unit between the interface unit and the machine,
wherein the control unit monitors an operating state of the communication service of the machine, and controls the switch unit to change a communication path and/or a communication method of the communication data according to failure dealing information corresponding to the communication service when detecting a failure related to the provision of the communication service by the machine.

The present invention is not limited to the above embodiments, but includes various modified examples. For example, in the above-mentioned embodiments, in order to easily understand the present invention, the specific configurations are described. However, the present invention does not always provide all of the configurations described above. Also, a part of one configuration example can be replaced with another configuration example, and the configuration of one embodiment can be added with the configuration of another embodiment. Also, in a part of the respective configuration examples, another configuration can be added, deleted, or replaced.

Also, parts or all of the above-described respective configurations, functions, processors, processing means may be realized, for example, as an integrated circuit, or other hardware. Also, the above respective configurations and functions may be realized by allowing the processor to interpret and execute programs for realizing the respective functions. That is, the respective configurations and functions may be realized by software. The information on the program, table, and file for realizing the respective functions can be stored in a storage device such as a memory, a hard disc, or an SSD (solid state drive), or a storage medium such as an IC card, an SD card, or a DVD.

Also, the control lines and the information lines necessary for description are illustrated, and all of the control lines and the information lines necessary for products are not illustrated. In fact, it may be conceivable that most of the configurations are connected to each other.

## Claims

1. A node device, comprising:
a virtual machine that executes a given application to provide a communication service;
an interface unit that transmits and receives communication data;
a virtual switch unit that transfers the communication data between the virtual machine and the interface unit; and
a control unit that controls a communication path through the virtual switch unit between the interface unit and the virtual machine,
wherein the control unit monitors an operating state of the communication service of the virtual machine, and controls the virtual switch unit to change a communication path and/or a communication method of the communication data according to failure dealing information corresponding to the communication service when detecting a failure related to the provision of the communication service by the virtual machine.

2. The node device according to claim 1,
wherein the failure related to the provision of the communication service is a failure of the application for providing the communication service, and
the control unit controls the switch unit to change the communication path and/or the communication method of the communication data according to the failure dealing information corresponding to the communication service when detecting the failure of the application.

3. The node device according to claim 1,
wherein the failure related to the provision of the communication service is a failure in the virtual machine or a failure in processing of the communication service.

4. The node device according to claim 1,
wherein the control unit controls the communication path of the virtual switch unit so as to return the received communication data to the interface unit, or discards the received communication data without transmitting the communication data to the virtual machine, according to the failure dealing information.

5. The node device according to claim 1,
wherein the virtual machine provides a first communication service for changing the communication data, and
the control unit controls the communication path of the virtual switch unit so as to return the received communication data to the interface unit and continues the communication, according to the failure dealing information corresponding to the virtual machine, when detecting the failure related to the provision of the first communication service by the virtual machine.

6. The node device according to claim 5,
wherein the first communication service for changing the communication data is a communication service of a WAN high-speed technology.

7. The node device according to claim 1,
wherein the virtual machine provides a second communication service for filtering a communication from an external, and
the control unit controls the virtual switch unit to discard the received communication data without transmitting the communication data to the virtual machine, according to the failure dealing information corresponding to the virtual machine, when detecting the failure related to the provision of the second communication service by the virtual machine.

8. The node device according to claim 1, further comprising: a storage unit that stores first failure dealing information for returning the received communication data to the interface unit without transmitting the communication data to the virtual machine according to the virtual machine that provides a first communication service for changing the communication data, and stores second failure dealing information for discarding the received communication data without transmitting the communication data to the virtual machine according to the virtual machine that provides a second communication service for filtering the communication from the external,
wherein the control unit controls the communication path of the virtual switch unit so as to return the received communication data to the interface unit according to the corresponding first failure dealing information, or discards the received communication data without transmitting the communication data to the virtual machine according to the corresponding second failure dealing information, when detecting the failure related to the provision of the first communication service or the second communication service by the virtual machine.

9. The node device according to claim 1,
wherein the control unit controls the virtual switch unit to return the communication data in a direction from a first network to a second network to the interface unit, and discard the communication data in a reverse direction, for the communication data to the virtual machine in which the failure is detected, to continue one-direction communication.

10. The node device according to claim 9, further comprising: a storage unit that stores a usage application of the virtual network interface of the virtual machine in advance,
wherein the control unit grasps whether the communication data is transmitted from the first network or the second network, with reference to the usage application.

11. The node device according to claim 1,
Wherein, if a processing time of the communication service exceeds a predetermined first threshold value, a utilization ratio of a resource allocated to the virtual machine exceeds a predetermined second threshold value, a stop of the communication service is detected, or a block of the virtual machine is detected, the failure of the communication service of the virtual machine is detected.

12. A communication system, comprising:
a first node device including
a virtual machine that executes a given application to provide a communication service;
an interface unit that transmits and receives communication data; and
a control unit that controls a communication path to the virtual machine, and
a second node device that is located outside of the first node device and transfers the communication data to the first node device,
wherein
the control unit monitors an operating state of the communication service of the virtual machine, and transmits a control instruction to the second node device according to failure dealing information corresponding to the communication service when detecting a failure related to the provision of the communication service by the virtual machine, and
the second node device receives the control instruction and changes a communication path and/or a communication method of the communication data corresponding to failure dealing information.

13. A method for switching virtual switch, comprising:
monitoring an operating state of a communication service of a virtual machine that executes a given application to provide the communication service, and
controlling a virtual switch to change a communication path and/or a communication method of a communication data from an interface unit to the virtual machine through the virtual switch according to failure dealing information corresponding to the communication service when detecting a failure related to the provision of the communication service by the virtual machine.
